Europäisches Patentamt

European Patent Office

Office européen des brevets

(19)

(11) Numéro de publication : **0 212 003**
**B1**

(12) **FASCICULE DE BREVET EUROPÉEN**

(45) Date de publication du fascicule du brevet :
**15.03.89**

(21) Numéro de dépôt : **85115670.3**

(22) Date de dépôt : **10.12.85**

(51) Int. Cl.⁴ : **F 28 F 19/00**, F 16 L 57/00,
F 16 L 55/02, F 28 D 21/00

(54) **Dispositif de protection d'échangeurs placés dans un conduit de fumées chargées en fines particules de cendres.**

(30) Priorité : **14.08.85 FR 8512405**

(43) Date de publication de la demande :
**04.03.87 Bulletin 87/10**

(45) Mention de la délivrance du brevet :
**15.03.89 Bulletin 89/11**

(84) Etats contractants désignés :
**AT BE CH DE FR GB IT LI LU NL SE**

(56) Documents cités :
**EP--A-- 0 123 569**
**FR--A-- 2 293 674**
**GB--A-- 633 365**
**GB--A-- 653 540**
**US--A-- 2 496 540**
**US--A-- 2 559 069**
**US--A-- 3 568 763**
**US--A-- 4 007 908**
**PATENTS ABSTRACTS OF JAPAN, vol. 7, no. 89 (M-207) [1234], 13 avril 1983; & JP - A - 58 13 987 (SASAKURA KIKAI SEISAKUSHO K.K.) 26-01-1983**
**Publication "Flyash erosion in utility boilers" presented at Canadian Electrical Association Conference, Oct. 1982.**

(73) Titulaire : **STEIN INDUSTRIE Société Anonyme dite:**
**19-21, avenue Morane Saulnier**
**F-78140 Velizy Villacoublay (FR)**

(72) Inventeur : **Bessouat, Roger**
**15, rue Ribera**
**F-75016 Paris (FR)**
Inventeur : **Mevel, Jean-Claude**
**10, rue de Franche Comté**
**F-91940 Les Ulis (FR)**
Inventeur : **Vandycke, Michel**
**87, rue Bobillot**
**F-75013 Paris (FR)**

(74) Mandataire : **Weinmiiler, Jürgen et al**
**Lennéstrasse 9 Postfach 24**
**D-8133 Feldafing (DE)**

Jouve, 18, rue St-Denis, 75001 Paris, France

## Description

La présente invention concerne un conduit de fumées chargées de fines particules de cendres, équipé d'échangeurs parallèles entre eux et constitués chacun par des tubes coudés comprenant des tronçons droits perpendiculaires à l'écoulement des fumées, ces tronçons droits constituant des zones principales, et comprenant des coudes et des tronçons droits parallèles à l'écoulement des fumées, ces coudes et ces tronçons droits constituant des zones d'extrémité.

Les grandes chaudières à charbon pulvérisé, chaudières pour centrales thermiques ou chaudières industrielles, sont munies d'un tel conduit de fumées.

La vitesse moyenne de circulation des fumées, au niveau des échangeurs est limitée en général entre 10 et 15 m/s pour éviter l'érosion des tubes par les cendres de charbon dont l'abrasivité, fonction de la nature du charbon, peut être importante.

Cependant, du fait de leur géométrie particulière et du jeu inévitable entre les parois du conduit et les tronçons droits parallèles à l'écoulement les plus proches de ces parois, les zones d'extrémité ont un coefficient de perte de charge inférieur à celui des zones principales. Il en résulte que ces zones d'extrémité sont généralement le siège de survitesses locales importantes, pouvant atteindre par exemple deux fois la vitesse moyenne de circulation due au dimensionnement, provoquant des érosions locales des tubes. Ceci entraîne d'importants travaux de remise en état qui sont onéreux et qui affectent la disponibilité de la chaudière.

Pour remédier à ces problèmes, on installe, en amont des échangeurs, des obstacles ayant essentiellement un effet de chicane. (Voir publication « FLYASH EROSION IN UTILITY BOILERS » presented at CANADIAN ELECTRICAL ASSOCIATION CONFERENCE, Oct. 26-28, 1982, Regina, Saskatchewan). Ces obstacles protègent uniquement l'entrée des échangeurs et n'assurent donc pas une protection totale de ceux-ci. De plus, au droit de l'extrémité de ces obstacles, peut se former une zone de survitesse importante pouvant s'accompagner de concentrations importantes de cendres, sources d'érosion locale.

La présente invention a pour but d'assurer une protection complète des échangeurs, en évitant toute zone de survitesses locales et toute zone de concentrations de cendres.

Le conduit de fumées selon la présente invention, est caractérisé en ce qu'il comporte, entre deux échangeurs adjacents, des panneaux, un panneau recouvrant les coudes et les tronçons droits des zones d'extrémité.

Ce conduit est ainsi conçu de manière à reconstituer, dans les zones d'extrémités, un coefficient de perte de charge au moins équivalent à celui existant dans les zones principales des échangeurs.

Avantageusement, chaque panneau est constitué d'un assemblage dont la partie active représente, vis-à-vis des fumées, un obstacle sensiblement équivalent à l'obstacle que représente la zone principale.

Selon un premier mode de réalisation, chaque panneau a la forme générale d'un triangle recouvrant les tronçons droits des zones d'extrémité.

Selon un deuxième mode de réalisation, chaque panneau a la forme générale d'un rectangle recouvrant toute une zone d'extrémité.

Il est décrit ci-après, à titre d'exemple et en référence aux dessins annexés, des dispositifs selon l'invention.

La figure 1 représente, en vue de face, un échangeur placé à l'intérieur d'un conduit de fumées vertical, cet échangeur étant constitué par six tubes coudés.

La figure 2 représente le conduit en coupe selon II de la figure 1.

La figure 3 représente un premier exemple du premier mode de réalisation d'un panneau.

La figure 4 est une vue de dessus partielle de la figure 3.

La figure 5 représente un deuxième exemple du premier mode de réalisation d'un panneau.

La figure 6 représente un exemple du deuxième mode de réalisation d'un panneau.

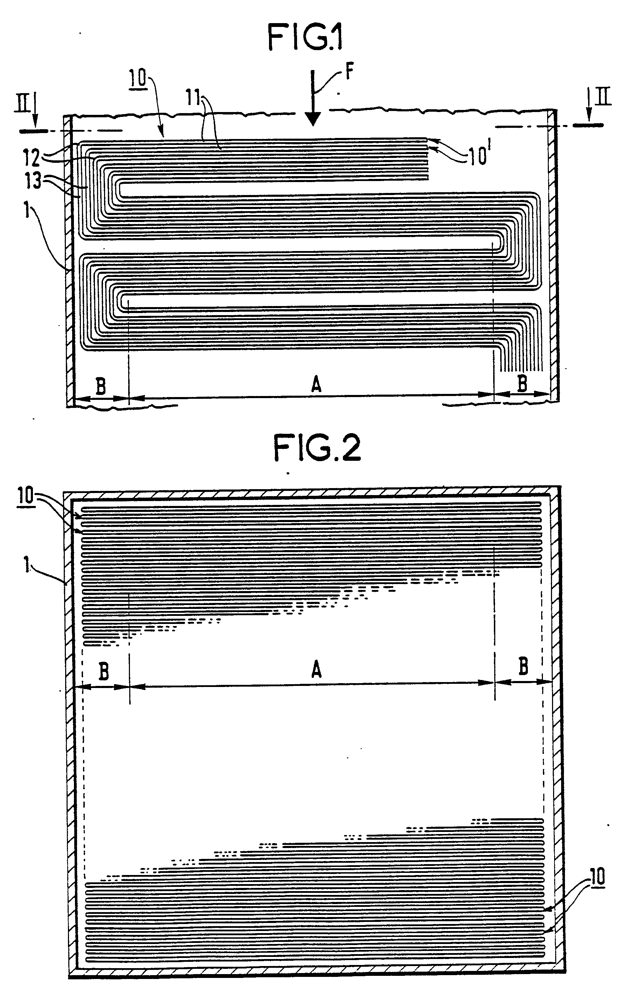

Dans la figure 1, on a représenté le conduit 1 et un seul échangeur 10 constitué de six tubes coudés 10', la flèche F représentant le sens de l'écoulement des fumées.

Chaque tube coudé 10' comporte plusieurs tronçons droits 11 perpendiculaires à l'écoulement des fumées, plusieurs coudes 12 et plusieurs tronçons droits 13 parallèles à l'écoulement. Six tronçons 11 droits perpendiculaires à l'écoulement représentent une zone principale A. Douze coudes 12 et six tronçons 13 droits parallèles à l'écoulement représentent une zone d'extrémité B où se situent les risques d'érosion.

La figure 2 montre la section du conduit 1 et la position de tous les échangeurs 10 placés parallèlement entre eux. Selon l'invention, chaque espace entre deux échangeurs 10 est muni de plusieurs panneaux, un panneau au niveau de chaque extrémité B et sur toute la hauteur du conduit.

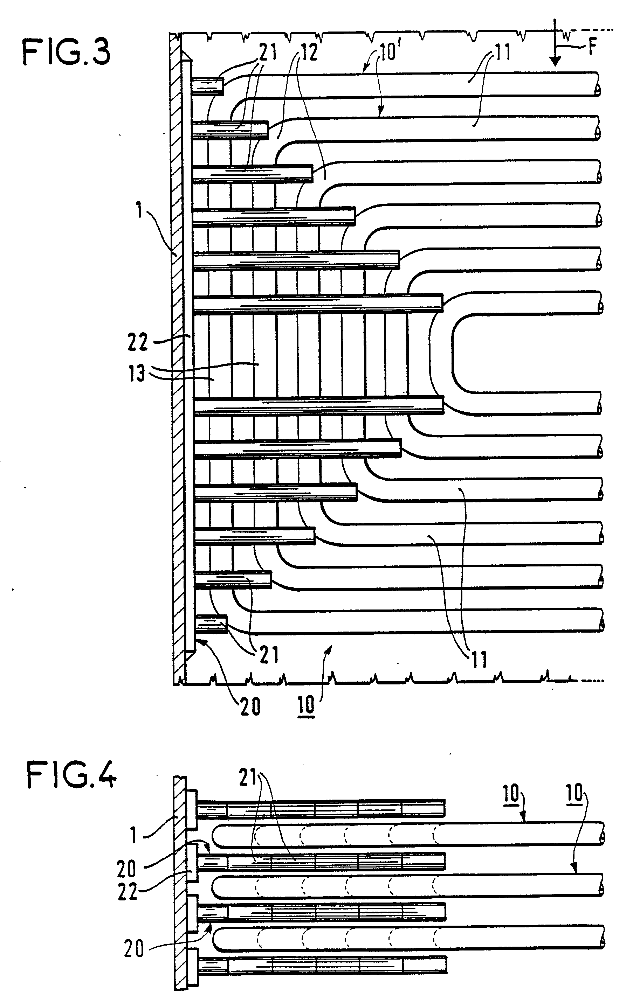

La figure 3 montre une extrémité B recouverte par un panneau triangulaire, cette forme triangulaire constituant le premier mode de réalisation du panneau. Ce panneau 20 est constitué de tubes 21 parallèles entre eux et reliés à leur extrémité à une plaque support 22 fixée à la paroi du conduit 1, les différentes liaisons étant effectuées par tous moyens connus. D'une manière avantageuse, chaque tube 21 est arrêté au niveau d'un coude 12 pour reconstituer au mieux le coefficient de pertes de charge des tronçons 11.

La figure 4 montre bien l'installation de panneaux 20 dans chaque espace entre deux échangeurs 10.

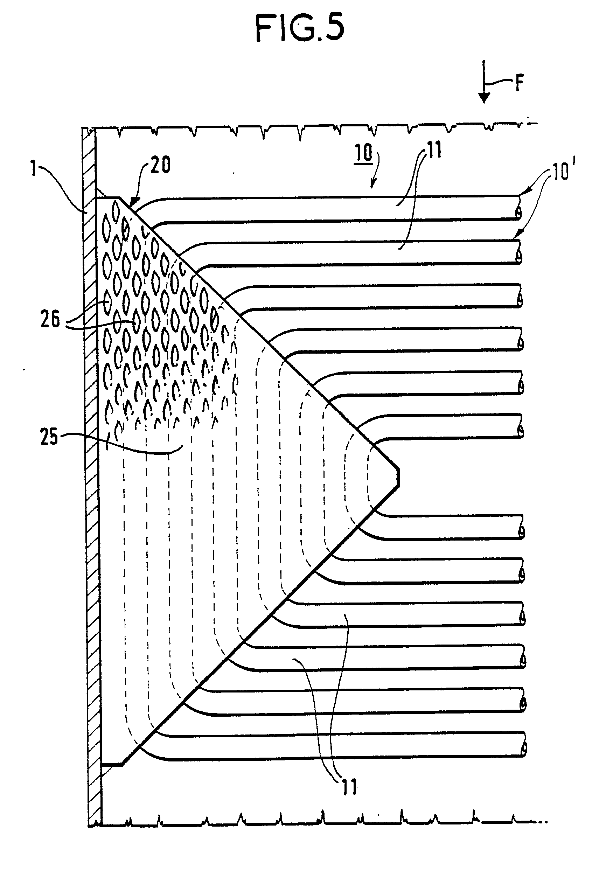

La figure 5 montre un panneau 20, également de forme triangulaire, constitué d'une plaque 25 de métal déployé, la plaque présentant des orifices 26.

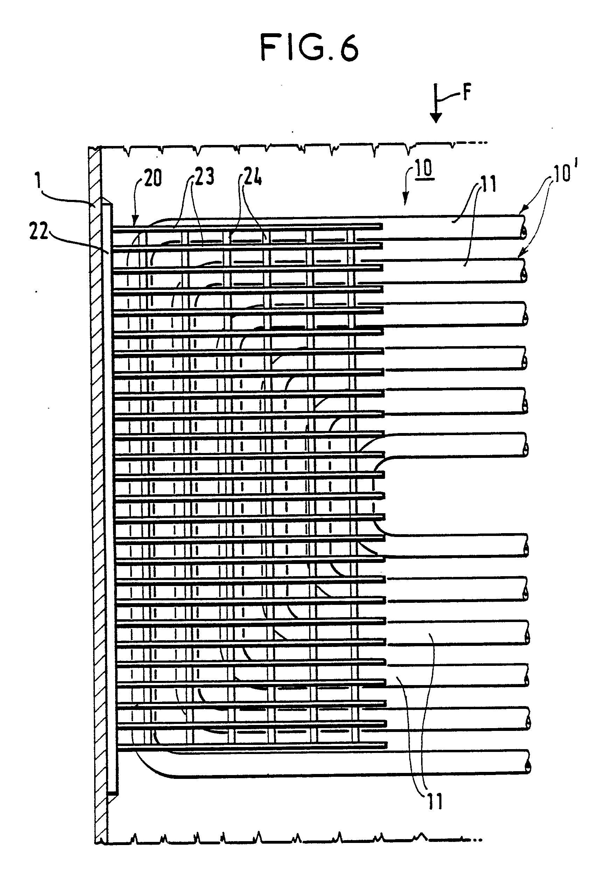

La figure 6 montre un panneau de forme rectangulaire, cette forme rectangulaire constituant le deuxième mode de réalisation du panneau. Ce panneau est constitué de lames 23 superposées et fixées à une de leur extrémité sur la plaque support 22 par tous moyens connus. Ces lames sont reliées entre elles par des liaisons verticales 24 telles que, par exemple des lames ou des fils torsadés réalisant un assemblage du type caillebotis.

Bien entendu tous ces panneaux sont réalisés dans un matériau approprié à la température ambiante, et sont en outre conçus de manière à ne pas être le siège d'accumulation de cendres.

## Revendications

1. Conduit (1) de fumées chargées de fines particules de cendres, équipé d'échangeurs (10) parallèles entre eux et constitués chacun par des tubes coudés (10') comprenant des tronçons droits (11) perpendiculaires à l'écoulement des fumées, ces tronçons droits (11) constituant des zones principales (A), et comprenant des coudes (12) et des tronçons droits (13) parallèles à l'écoulement des fumées, ces coudes (12) et ces tronçons droits (13) constituant des zones d'extrémité (B), caractérisé en ce qu'il comporte, entre deux échangeurs adjacents, des panneaux (20), un panneau recouvrant les coudes (12) et les tronçons droits (13) des zones d'extrémité (B).

2. Conduit selon la revendication 1, caractérisé en ce que chaque panneau (20) est constitué d'un assemblage dont la partie active représente, vis-à-vis des fumées, un obstacle sensiblement équivalent à l'obstacle que représente la zone principale (A).

3. Conduit selon la revendication 2, caractérisé en ce que chaque panneau (20) a la forme générale d'un triangle recouvrant les tronçons droits (13) des zones d'extrémité (B).

4. Conduit selon la revendication 2, caractérisé en ce que chaque panneau (20) a la forme générale d'un rectangle recouvrant toute une zone d'extrémité (B).

## Claims

1. A duct (1) for smoke loaded with fine particles of ash and equipped with mutually parallel heat exchangers (10) which are each constituted by bended tubes (10') comprising rectilinear portions (11) perpendicular to the smoke flow, these rectilinear portions (11) constituting main zones, and comprising bends (12) and rectilinear portions (13) which are parallel to the smoke flow, these bends (12) and these rectilinear portions (13) constituting end zones (B), characterized in that it comprises panels (20) between two adjacent heat exchangers, a panel covering the bends (12) and the rectilinear portions (13) of the end zones (B).

2. A duct according to claim 1, characterized in that each panel (20) is constituted by an assembly having an active portion which represents, for the smoke, an obstacle which is essentially equivalent to the obstacle represented by the main zone (A).

3. A duct according to claim 2, characterized in that each panel (20) has the general shape of a triangle covering the rectilinear portions (13) of the end zones (B).

4. A duct according to claim 2, characterized in that each panel (20) has the general shape of a rectangle covering an entire end zone (B).

## Patentansprüche

1. Leitung (1) für mit feinen Ascheteilchen befrachteten Rauch, ausgestattet mit untereinander parallelen Wärmetauschern (10), die je aus Schlangenrohren (10') bestehen, welche Hauptbereiche (A) bildende gerade Abschnitte (11) senkrecht zum Rauchfluß und Endbereiche (B) bildende Umlenkstücke (12) und gerade Abschnitte (13) parallel zum Rauchfluß aufweisen, dadurch gekennzeichnet, daß sie zwischen zwei benachbarten Wärmetauschern Tafeln (20) aufweist, wobei eine Tafel die Umlenkstücke (12) und die geraden Abschnitte (13) der Endbereiche (B) bedeckt.

2. Leitung nach Anspruch 1, dadurch gekennzeichnet, daß jede Tafel (20) aus einer Einheit besteht, deren aktiver Teil gegenüber dem Rauch ein Hindernis darstellt, das im wesentlichen dem Hindernis äquivalent ist, das der Hauptbereich (A) bildet.

3. Leitung nach Anspruch 2, dadurch gekennzeichnet, daß jede Tafel (20) die allgemeine Form eines Dreiecks aufweist, das die geraden Abschnitte (13) der Endbereiche (B) bedeckt.

4. Leitung nach Anspruch 2, dadurch gekennzeichnet, daß jede Tafel (20) die allgemeine Form eines Rechtecks aufweist, das einen ganzen Endbereich (B) bedeckt.

# FIG.1

# FIG.2

FIG.3

FIG.4

# FIG.5

# FIG.6